# EUROPÄISCHE PATENTSCHRIFT

(11) **EP 3 564 592 B1**
(45) Veröffentlichungstag und Bekanntmachung des Hinweises auf die Patenterteilung: **17.11.2021**
(21) Anmeldenummer: 19172204.0
(22) Anmeldetag: 02.05.2019
(51) Int. Cl.: F24D 19/10

(54) **KONTROLLEINHEIT FÜR EIN PROZESSSYSTEM, PROZESSSYSTEM SOWIE VERFAHREN ZUR ÜBERWACHUNG EINES PROZESSSYSTEMS**
PROCESS SYSTEM, CONTROL UNIT FOR A PROCESS SYSTEM AND METHOD FOR MONITORING A PROCESS SYSTEM
UNITÉ DE CONTRÔLE POUR UN SYSTÈME DE PROCESSUS, SYSTÈME DE PROCESSUS AINSI QUE PROCÉDÉ DE SURVEILLANCE D'UN SYSTÈME DE PROCESSUS

(30) Priorität: 03.05.2018 DE 102018110550
(43) Veröffentlichungstag der Anmeldung: 06.11.2019
(73) Patentinhaber: GLR - Gesellschaft für Leit- und Regeltechnik mbH, 18059 Papendorf (DE)
(72) Erfinder: Traub, Thomas, 18059 Papendorf OT Gruß Stove (DE); Schmidt, Nick, 17498 Neuenkirchen OT Leist 1 (DE)
(74) Vertreter: Gulde & Partner

(56) Entgegenhaltungen:
- EP-A1- 3 035 281
- DE-A1- 10 030 294
- DE-A1-102005 046 235
- DE-A1-102008 003 866
- DE-A1-102009 038 351
- DE-A1-102012 215 368
- US-A- 6 122 603

## Beschreibung

Die Erfindung betrifft eine Kontrolleinheit für ein Prozesssystem gemäss Anspruch 1, bei dem wenigstens ein Medium von wenigstens einem ersten Zustand in wenigstens einen zweiten Zustand überführt wird. Die Erfindung betrifft ferner ein Prozesssystem mit einer derartigen Kontrolleinheit sowie ein Verfahren zum Überwachen eines Prozesssystems gemäss Anspruch 11.

Es ist bekannt, dass in Automationsanlagen, beispielsweise der Heizungs-, Lüftungs- und Klimatechnik einzelne Baugruppen oder Baugruppensysteme dahingehend überprüft werden, ob diese in ihrem optimalen Betriebs- oder Auslegungsbereich arbeiten. Hierbei werden Istwerte der Anlagen, beispielsweise der Baugruppen, erfasst und dargestellt.

DE 298 20 409 U1 offenbart hierzu beispielsweise eine Energieampel zur Visualisierung von energetischen Zuständen. Hierbei wird die momentane qualitative Energiesituation einer Anlage, beispielsweise einer Heizungsanlage, gemessen und visualisiert. Der Nutzer erhält also einen Hinweis auf den momentanen Energieverbrauch der überwachten Anlage.

DE 10 2016 201 105 A1 offenbart eine Vorrichtung und ein Verfahren für die Steuerung eines Gebäudeenergiesystems. Hierbei werden ein Klimagerät, eine Energieerzeugungseinheit zur Erzeugung von elektrischer Energie und ein Energiespeicher zum Speichern von elektrischer Energie in Abhängigkeit mindestens einer Bedingung für eine eingespeiste oder aufgenommene elektrische Energie aus einem Netz gesteuert.

DE 10 2009 038 351 A1, US 6,122,603 A, EP 3 035 281 A1, DE 100 30 294 A1, DE 10 2012 215 368 A1, DE 10 2008 003 866 A1 und DE 10 2005 046 235 A1 offenbaren jeweils Verfahren und Anordnungen zur Ermittlung eines Energieverbrauchs von Prozesssystemen. Ermittelte Messwerte werden mit Sollwerten verglichen, um eine Energieeffizienz festzustellen. Die Sollwerte werden aus nutzungs- und/oder gebäudeabhängigen Parametern der zu überwachenden Prozesssysteme gewonnen.

Der Erfindung liegt die Aufgabe zugrunde, eine Kontrolleinheit für ein Prozesssystem, ein Prozesssystem mit einer derartigen Kontrolleinheit und ein Verfahren zum Überwachen eines Prozesssystems zu schaffen, mittels denen in einfacher Weise die Energieeffizienz von Prozesssystemen verbessert werden kann.

Erfindungsgemäß wird diese Aufgabe durch eine Kontrolleinheit für ein Prozesssystem mit den in Anspruch 1 genannten Merkmalen gelöst.

Dadurch, dass eine Kontrolleinheit für ein Prozesssystem, bei dem wenigstens ein Medium von wenigstens einem ersten Zustand in wenigstens einen zweiten Zustand überführt wird
- ein Controller, der mit wenigstens einem Messgerät zur Erfassung wenigstens einer Messgröße des Mediums im ersten Zustand und mit wenigstens einem Messgerät zur Erfassung wenigstens einer Messgröße des mindestens zweiten Zustands verbunden ist;
- der Controller ferner mit wenigstens einem Messgerät zur Erfassung eines Energieverbrauchs des Prozesssystems bei der Überführung des Mediums von dem wenigstens einen ersten Zustand in den wenigstens einen zweiten Zustand verbunden ist;
- der Controller einen Prozessor umfasst, der den Energieverbrauch ins Verhältnis der Differenz der Messgrößen des Mediums im ersten Zustand zum zweiten Zustand setzt;
- der Controller ein Speichermittel umfasst, in dem ein idealer simulierter physikalischer Vergleichswert ohne Wirkungsgradverluste des Energiebedarfs für die Überführung einer definierten Menge eines Mediums von einem definierten ersten Zustand in einen definierten zweiten Zustand abgelegt ist;
- der Controller einen Vergleicher umfasst, der den idealen simulierten physikalischen Vergleichswert ohne Wirkungsgradverluste des Energiebedarfs mit dem gemessenen Energieverbrauch, bezogen auf die tatsächliche Menge des vom ersten Zustand in den zweiten Zustand überführten Mediums, vergleicht;
- der Controller eine Anzeigeeinrichtung umfasst, die das Ergebnis des Vergleichs anzeigt, ist es vorteilhaft möglich, eine Kontrolleinheit zur Verfügung zu stellen, mittels der eine Effizienzüberwachung von Prozessen durch den permanenten Abgleich des tatsächlichen Prozesses mit einem dynamisierten, idealen mathematisch/physikalischen Vergleichsprozess durchgeführt werden kann. Die Kontrolleinheit berechnet permanent die Differenz des tatsächlichen Energieverbrauchs des Prozesssystems mit dem idealisierten theoretischen Energiebedarf des Prozesssystems und stellt die Abweichungen dar. Diese Abweichungen geben einem Nutzer einen Hinweis auf den tatsächlichen Wirkungsgrad des eingesetzten Prozesssystems. Somit kann vorteilhafterweise insbesondere auf von Herstellern angegebene erwartete Wirkungsgrade auf die tatsächlichen vorgefundenen Wirkungsgrade reagiert werden.

Diese Reaktionen können beispielsweise in einer Reklamation bei den Herstellern der Prozesssysteme liegen. Ferner sind gezielte Ursachenforschungen und deren Behebung möglich.

In bevorzugter Ausgestaltung der Erfindung ist vorgesehen, dass das Prozesssystem eine Wärmeerzeugungsanlage, Elektroenergieerzeugungsanlage, Kälteanlage, Lüftungsanlage und/oder Klimaanlage ist. Hierdurch wird vorteilhaft möglich, mittels der erfindungsgemäßen Kontrolleinheit gerade für derartige energieintensive Anlagen eine Wirkungsgradüberprüfung, beziehungsweise daraus ableitend eine Wirkungsgradverbesserung, zu erzielen.

In weiterer bevorzugter Ausgestaltung der Erfindung ist vorgesehen, dass die Kontrolleinheit Standardschnittstellen zur Verbindung mit den Messgeräten zur Erfassung der Messgrößen des Mediums und zur Erfassung des Energieverbrauchs des Prozesssystems aufweist. Durch eine derartige Ausgestaltung wird eine einfache Nachrüstung eines Prozesssystems mit der Kontrolleinheit möglich. Über die Standardschnittstelle können somit auch Messgeräte unterschiedlicher Fabrikate in einfacher Weise mit der Kontrolleinheit verbunden werden.

Darüber hinaus ist in weiterer bevorzugter Ausgestaltung der Erfindung vorgesehen, dass die Kontrolleinheit mit den Messgeräten leitungsgebunden und/oder leitungslos verbindbar ist. Hierdurch wird eine sehr flexible Integration der Kontrolleinheit in einem Prozesssystem möglich. Insbesondere bei einer leitungslosen Verbindung, beispielsweise über Bluetooth oder Funkschnittstellen, ist auch bei gegebenen schwierigen baulichen Ausgangssituationen eine Einbindung der Kontrolleinheit problemlos möglich.

Ferner wird in bevorzugter Ausgestaltung der Erfindung vorgesehen, dass ein thermischer und/oder elektrischer Energieverbrauch des Prozesssystems erfasst wird. Mit dem thermischen und/oder elektrischen Energieverbrauch können somit die Hauptenergiearten in ihrem Verbrauch unabhängig voneinander erfasst und durch die Kontrolleinheit in ihrer Gesamtheit einheitlich bewertet werden.

Darüber hinaus ist in weiterer bevorzugter Ausgestaltung der Erfindung vorgesehen, dass der Vergleich des Energieverbrauchs mit dem idealisierten theoretischen Energiebedarf in Echtzeit erfolgt. Hierdurch wird in einfacher Weise eine sofortige Überprüfung des momentanen Wirkungsgrades der Prozessanlage möglich. So ist vorteilhaft möglich, diesen Vergleich unmittelbar anzuzeigen. Somit ist eine unmittelbare Kontrolle, entweder durch eine Bedienperson oder auch automatisiert durch entsprechende Signalisierung bei Überschreiten eines Grenzwertes möglich. Es können somit umgehende Maßnahmen, gegebenenfalls auch eine Beschädigung des Prozesssystems, verhindert, beziehungsweise vorbeugend ergriffen werden.

In bevorzugter Ausgestaltung der Erfindung ist ferner vorgesehen, dass die Anzeige des Ergebnisses des Vergleichs in einer Wirkungsgradabweichung zwischen tatsächlichem Wirkungsgrad und erwartbarem Wirkungsgrad des Prozesssystems erfolgt. Hierdurch kann in einfacher Weise sofort erkannt werden, welche Wirkungsgradabweichung tatsächlich momentan vorliegt. Vorzugsweise kann auch vorgesehen sein, die Wirkungsgradabweichung durch eine Ampel sichtbar zu machen, sodass je nach aktivierter Farbe der Ampel sofort auf den Wirkungsgradzustand des Prozesssystems geschlossen werden kann.

Darüber hinaus ist in weiterer bevorzugter Ausgestaltung der Erfindung vorgesehen, dass die Anzeige des Ergebnisses des Vergleichs in Betriebsmehrkosten des Prozesssystems gegenüber einem optimalen Betrieb des Prozesssystems erfolgt. Hierdurch wird in einfacher Weise durch Anzeige eines monetären Betrages dem Nutzer, beziehungsweise Betreiber des Prozesssystems sofort augenfällig, welche zusätzlichen Kosten durch Abweichung des tatsächlichen Wirkungsgrades vom optimalen Wirkungsgrad zu überwachen sind. Dies gibt einen guten Überblick und initiiert gegebenenfalls einen raschen Handlungsbedarf.

Schließlich ist in weiterer bevorzugter Ausgestaltung der Erfindung vorgesehen, dass die Kontrolleinheit über eine Kommunikationsschnittstelle mit einem übergeordneten System verbindbar ist. Hierdurch wird vorteilhaft möglich, die Kontrolle nicht nur vor Ort also am Einbauort der Kontrolleinheit vorzunehmen, sondern auch gegebenenfalls entfernt über entsprechende Übertragung der Ergebnisse eine entsprechende Übersicht zu erlangen. Darüber hinaus kann über die Kommunikationsschnittstelle auch eine fortlaufende Übermittlung der Messergebnisse erfolgen, sodass eine lückenlose Protokollierung des Energieverbrauchs des Prozesssystems und insbesondere auch dessen Abweichung vom optimalen Wirkungsgrad möglich ist.

Die Aufgabe wird ferner durch ein Prozesssystem mit den im Anspruch 10 genannten Merkmalen gelöst.

Die Erfindung wird ferner durch ein Verfahren zur Überwachung eines Prozesssystems mit den im Anspruch 11 genannten Merkmalen gelöst. Dadurch, dass ein Energieverbrauch eines Prozesssystems bei der Überführung eines Mediums von wenigstens einem ersten Zustand in wenigstens einen zweiten Zustand erfasst wird, dieser Energieverbrauch mit einem idealen simulierten physikalischen Vergleichswert ohne Wirkungsgradverluste des Energiebedarfs für die Überführung des Mediums von dem wenigstens einen ersten in den wenigstens einen zweiten Zustand verglichen wird und der Vergleich angezeigt wird, ist vorteilhaft möglich, unmittelbar einen tatsächlichen Wirkungsgrad des Prozesssystems mit einem erwarteten optimalen Wirkungsgrad zu vergleichen und diesen Vergleich anzuzeigen und Prozesssysteme in einfacher Weise auf ihren energetischen Wirkungsgrad zu kontrollieren, beziehungsweise zu überwachen. Die Überwachung kann in vorteilhafter Weise permanent, also in Echtzeit oder auch in vorgebbaren Zeitintervallen, die in Bereichen von mehreren Stunden, mehreren Wochen, mehreren Monaten oder dergleichen liegen können, durchgeführt werden.

Die Erfindung wird nachfolgend in einem Ausführungsbeispiel anhand der zugehörigen Zeichnung näher erläutert.

Die Figur zeigt ein Blockschaltbild eines Prozesssystems mit einer erfindungsgemäßen Kontrolleinheit.

Die Figur zeigt schematisch ein insgesamt mit 10 bezeichnetes Prozesssystem. Bei dem Prozesssystem kann es sich beispielsweise um eine Wärmeerzeugungsanlage, Elektroenergieerzeugungsanlage, Kälteanlage, Lüftungsanlage und/oder Klimaanlage handeln. Derartige Prozesssysteme beinhalten im Einzelnen nicht dargestellte Baugruppen oder Baugruppensysteme, wie beispielsweise Anlagen zum Transport von Medien, Einrichtungen zum Aufbringen von thermischer Energie auf die Medien und passive und/oder aktive Stelleinrichtungen, Mischeinrichtungen oder dergleichen.

Dem Prozesssystem 10 ist eine insgesamt mit 12 bezeichnete Kontrolleinheit zugeordnet. Bei der Kontrolleinheit 12 handelt es sich beispielsweise um ein kompaktes Gerät, das mobil eingesetzt werden kann oder das in entsprechenden Schaltanlagen des Prozesssystems 10 verbaut sein kann.

Die Kontrolleinheit 12 umfasst einen Prozessor 14, ein Speichermittel 16, einen Vergleicher 18 sowie eine Anzeigeeinrichtung 20.

Die Kontrolleinheit 12 ist ferner mit einer Vielzahl von Schnittstellen 22 ausgestattet.

Mittels dem Prozesssystem 10 wird ein Medium 24 von einem ersten Zustand 26in einen zweiten Zustand 28 überführt. Bei dem Medium 24 handelt es sich beispielsweise um Luft.

Der erste Zustand 26 des Mediums 24 wird über Messgeräte 30, 31 und 32 erfasst.

Der zweite Zustand 28 des Mediums 24 wird ebenfalls über Messgeräte 34 und 36 erfasst.

Bei den Messgeräten 30, 31, 32, 34, 36 kann es sich beispielsweise um Messgeräte zum Erfassen einer Temperatur, einer relativen Feuchtigkeit oder andere physikalische Messwerte des Mediums 24 in dem jeweiligen Zustand 26 bzw. 28 handeln.

Die Messgeräte 30, 31, 32, 34 und 36 sind über Signalleitungen 38, 40, 41, 42 und 44 mit den Schnittstellen 22 der Kontrolleinheit 12 verbunden. Die Signalübertragung kann hier beispielsweise leitungsgebunden oder auch leitungslos (Bluetooth, Funk oder dergleichen) erfolgen.

Dem Prozesssystem 10 ist wenigstens ein Messgerät 46 zugeordnet. Mittels dem Messgerät 46 kann ein Energieverbrauch der Baugruppen des Prozesssystems 10 gemessen bzw. ermittelt werden. Hierbei kann eine thermische Energie zum Erwärmen und/oder Kühlen des Mediums 24 ermittelt werden. Ferner kann eine elektrische Energie zum Transport des Mediums 24 von seinem ersten Zustand 26 in seinen zweiten Zustand 28 ermittelt werden. Das Messgerät 46 ist über eine Signalleitung 48 mit einer Schnittstelle 22 der Kontrolleinheit 12 verbunden. Die Signalleitung 48 kann ebenfalls wieder leitungsgebunden oder drahtlos ausgebildet sein.

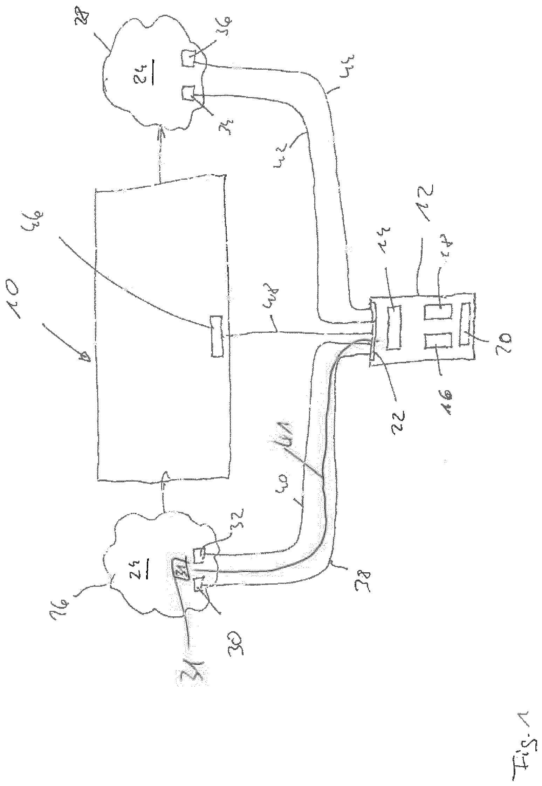

Die in Figur 1 dargestellte Anordnung zeigt folgende Funktionen:
Bei einem angenommenen konkreten ersten Ausführungsbeispiel soll das Medium 24 Luft sein, das in seinem ersten Zustand 26 beispielsweise eine Temperatur von 0°C und eine relative Luftfeuchte von 80 % aufweist. Mittels dem Prozesssystem 10 soll das Medium 24 in seinen zweiten Zustand 28 mit einer Temperatur von 22°C und einer relativen Luftfeuchte von 20 % überführt werden.

Mittels der Messgeräte 30, 31, 32, 34, 36 wird die jeweilige Temperatur, die jeweilige relative Luftfeuchte und der Volumenstrom sowohl im ersten Zustand 26 als auch im zweiten Zustand 28 permanent gemessen und der Kontrolleinheit 12 über die Signalleitungen 38, 40, 41, 42, 44 und die Schnittstellen 22 mitgeteilt. Der Prozessor 14 der Kontrolleinheit 12 verarbeitet die eingehenden Messergebnisse in Echtzeit.

Mittels dem Messgerät 46 wird der Energieverbrauch des Prozesssystems 10 zur Transformation des Mediums 24 von seinem ersten Zustand 26 in seinen zweiten Zustand 28 permanent gemessen. Dies ist einerseits thermischer Energieverbrauch zum Erwärmen und Trocknen des Mediums 24 und ein elektrischer Energieverbrauch zum Transport des Mediums 24 durch das Prozesssystem 10. Hierzu werden geeignete und an sich bekannte Messgeräte bzw. Messverfahren eingesetzt.

Unter permanent gemessen wird verstanden, dass die Messgeräte über der Zeit in vorgebbaren Zeitabständen ermittelt werden.

Die Messergebnisse über den tatsächlichen Energieverbrauch des Prozesssystems 10 werden der Kontrolleinheit 12 über die Signalleitung 48 und die Schnittstelle 22 zugeführt. Der Prozessor 14 wertet den momentanen Energieverbrauch des Prozesssystems 10 ebenfalls in Echtzeit aus.

In dem Speichermittel 16 ist ein idealisierter theoretischer Energiebedarf für die Überführung einer definierten Menge des Mediums 24 von einem definierten ersten Zustand in einen definierten zweiten Zustand abgelegt. Diese Werte beinhalten beispielsweise den Energiebedarf um 1 kg Luft mit einer bekannten Temperatur und einer bekannten Luftfeuchte in einem zweiten Zustand mit einer davon abweichenden bekannten Temperatur und bekannten Luftfeuchte. Anhand dieses idealisierten Energiebedarfs kann somit für jede beliebige Menge an Luft (Medium 24) zu jedem beliebigen Zustand (Temperatur, Luftfeuchte, Luftdruck, Dichte) exakt der idealisierte theoretische Energiebedarf bestimmt werden.

Der idealisierte Energiebedarf wird zuvor anhand bekannter mathematischer Formeln entwickelt.

Dieser idealisierte theoretische Energiebedarf wird dem Vergleicher 18 zur Verfügung gestellt, der gleichzeitig vom Prozessor 14 die tatsächlichen Messwerte in den Zuständen 26 und 28 des Mediums 24 und des tatsächlichen Energieverbrauchs des Prozesssystems 10 erhält.

Der Vergleicher kann nunmehr anhand der vom Speichermittel 16 und vom Prozessor 14 gelieferten Ergebnisse den idealisierten theoretischen Energiebedarf mit dem gemessenen Energieverbrauch, bezogen auf die tatsächliche Menge des transportierten Mediums 24, vergleichen und ein Ergebnis dieses Vergleichs der Anzeigeeinrichtung 20 mitteilen.

Aufgrund unvermeidlicher Wirkungsgradverluste in dem Prozesssystem 10 wird es immer zu einer Abweichung zwischen dem idealisierten theoretischen Energiebedarf und dem tatsächlichen Energieverbrauch kommen. Die Größe dieser Abweichung, die der Anzeigeeinrichtung 20 zugeführt wird, entspricht dem tatsächlichen Wirkungsgrad des Prozesssystems 10.

Dieser tatsächliche Wirkungsgrad kann mit dem erwarteten Wirkungsgrad (beispielsweise gemäß Herstellerangaben) des Prozesssystems 10 verglichen werden, um so festzustellen, ob das Prozesssystem 10 in seinem optimalen Betrieb läuft.

Bei übergroßen Abweichungen des tatsächlichen Wirkungsgrades vom erwarteten Wirkungsgrad kann entweder auf fehlerhafte Herstellerangaben für das Prozesssystem 10 oder auf Wartungs- und/oder Instandsetzungserfordernissen im Prozesssystem 10 geschlossen werden.

Es wird deutlich, dass mit der Kontrolleinheit 12 ein Gerät zur Verfügung steht, mit dem in schneller und einfacher Weise die Energieeffizienz eines vorhandenen Prozesssystems 10 überwacht und dokumentiert werden kann. Die Kontrolleinheit 12 errechnet also aus den Messdaten einen idealen simulierten physikalischen Vergleichswert ohne Wirkungsgradverluste und einen optimalen Vergleichswert auf Basis von Anlagen mit modernster Ausstattung sowie den tatsächlichen Wert für den Gesamt-Energiebedarf der Anlage. Die Kontrolleinheit 12 überwacht und vergleicht diese Werte permanent und zeigt die Abweichungen vom Wunschzustand an.

Aus der Abweichung durch den wahrscheinlich nicht optimalen Betrieb des Prozesssystems 10 vom Optimum, können konkrete Maßnahmen zur Effizienzsteigerung hergeleitet werden. Dies sind insbesondere zielgerichtete Wartungs- und Nachregulierungsarbeiten oder Reinvestitionen im Prozesssystem 10.

Die Entscheidung für solche Maßnahmen wird unterstützt durch eine optionale näherungsweise Errechnung der absoluten Werte an Betriebsmehrkosten gegenüber der optimalen Anlagenkonstellation. Hierzu kennt die Kontrolleinheit 12 die momentan geltenden Preise für einen Energiebezug beispielsweise für Gas und/oder Strom.

Der Controller erhält die zur Überwachung notwendigen physikalischen Werte über Standardkommunikationsschnittstellen 22 von installierten Sensoren bzw. Messgeräten.

Die Kontrolleinheit 12 kann die Berechnungsergebnisse sowohl an der Anzeigeeinrichtung 20 anzeigen als auch über ein optional integriertes Web-Interface oder über andere StandardKommunikationsschnittstellen an ein übergeordnetes System weitermelden.

Bei den Schnittstellen 22 handelt es sich um Standardschnittstellen, mittels denen die Kontrolleinheit 12 universell in beliebige Prozesssysteme herstellerunabhängig nachrüstbar ist.

In der Praxis werden die Messwerte üblicherweise als elektrisches Standardsignal (0-10 Volt, 4-20 mA oder definierter elektrischer Widerstand) zur Verfügung gestellt. Die Signale werden durch elektronische Automatisierungseinheiten (SPS), (DCC) verarbeitet oder gesammelt.

Durch die Automatisierungseinheiten können Signale über genormte Kommunikationsschnittstellen (RS 323, RS 454, Ethernet) und entsprechende Protokolle (Profibus, Modbus, TCP/IP oder dergleichen) ausgegeben werden. Die Ablage und Prozessbereitstellung aller Daten erfolgt über eine implementierte (SQL)-Datenbank.

### Bezugszeichen

- 10: Prozesssystem
- 12: Kontrolleinheit
- 14: Prozessor
- 16: Speichermittel
- 18: Vergleicher
- 20: Anzeigeeinrichtung
- 22: Standardschnittstellen
- 24: Medium
- 26: Zustand
- 28: Zustand
- 30: Messgerät
- 31: Messgerät
- 32: Messgerät
- 34: Messgerät
- 36: Messgerät
- 46: Messgerät

## Patentansprüche

1. Kontrolleinheit (12) für ein Prozesssystem (10), bei dem wenigstens ein Medium (24) von wenigstens einem ersten Zustand (26) in wenigstens einen zweiten Zustand (28) überführt wird,
**gekennzeichnet durch**
einen Controller, der mit wenigstens einem Messgerät (30, 31, 32) zur Erfassung wenigstens einer Messgröße des Mediums (24) im ersten Zustand (26) und mit wenigstens einem Messgerät (34, 36) zur Erfassung wenigstens einer Messgröße des Mediums (24) im zweiten Zustand (28) verbunden ist,
der Controller ferner mit wenigstens einem Messgerät (46) zur Erfassung eines Energieverbrauchs des Prozesssystems (10) bei der Überführung des Mediums (24) von dem wenigstens einen ersten Zustand (26) mit dem wenigstens einen zweiten Zustand (28) verbunden ist,
der Controller einen Prozessor (14) umfasst, der den Energieverbrauch ins Verhältnis der Differenz der Messgrößen des Mediums (24) im ersten Zustand (26) zum zweiten Zustand (28) setzt,
der Controller ein Speichermittel (16) umfasst, in dem ein idealer simulierter physikalischer Vergleichswert ohne Wirkungsgradverluste des Energiebedarfs für die Überführung einer definierten Menge eines Mediums (24) von einem definierten ersten Zustand in einem definierten zweiten Zustand abgelegt ist,
der Controller einen Vergleicher (18) umfasst, der den idealen simulierten physikalischen Vergleichswert ohne Wirkungsgradverluste des Energiebedarfs mit dem gemessenen Energieverbrauch, bezogen auf die tatsächliche Menge des vom ersten Zustand (26) in den zweiten Zustand (28) überführten Mediums (24), vergleicht,
der Controller eine Anzeigeeinrichtung (20) umfasst, die das Ergebnis des Vergleichs anzeigt.

2. Kontrolleinheit (12) nach Anspruch 1,
**dadurch gekennzeichnet, dass**
das Prozesssystem (10) eine Wärmeerzeugungsanlage, Elektroenergieerzeugungsanlage, Kälteanlage, Lüftungsanlage und/oder Klimaanlage ist.

3. Kontrolleinheit (12) nach einem der vorhergehenden Ansprüche,
**dadurch gekennzeichnet, dass**
die Kontrolleinheit (12) Standardschnittstellen (22) zur Verbindung mit den Messgeräten (30, 31, 32, 34, 36, 46) umfasst.

4. Kontrolleinheit (12) nach einem der vorhergehenden Ansprüche,
**dadurch gekennzeichnet, dass**
die Kontrolleinheit (12) mit den Messgeräten (30, 31, 32, 34, 36, 46) leitungsgebunden und/oder leitungslos verbindbar ist.

5. Kontrolleinheit (12) nach einem der vorhergehenden Ansprüche,
**dadurch gekennzeichnet, dass**
ein thermischer und/oder elektrischer Energieverbrauch des Prozesssystems (10) erfasst wird.

6. Kontrolleinheit (12) nach einem der vorhergehenden Ansprüche,
**dadurch gekennzeichnet, dass**
der Vergleich des Energieverbrauchs mit dem idealisierten theoretischen Energiebedarf in Echtzeit erfolgt.

7. Kontrolleinheit (12) nach einem der vorhergehenden Ansprüche,
**dadurch gekennzeichnet, dass**
die Anzeige des Ergebnisses des Vergleichs in einer Wirkungsgradabweichung zwischen tatsächlichem Wirkungsgrad und erwartbarem Wirkungsgrad des Prozesssystems (10) erfolgt.

8. Kontrolleinheit (12) nach einem der vorhergehenden Ansprüche,
**dadurch gekennzeichnet, dass**
die Anzeige des Ergebnisses des Vergleichs in Betriebsmehrkosten des Prozesssystems (10) gegenüber einem optimalen Betrieb des Prozesssystems (10) erfolgt.

9. Kontrolleinheit (12) nach einem der vorhergehenden Ansprüche,
**dadurch gekennzeichnet, dass**
die Kontrolleinheit (12) über eine Kommunikationsschnittstelle mit einem übergeordneten System verbindbar ist.

10. Prozesssystem (10), **gekennzeichnet durch**
eine Kontrolleinheit (12) nach wenigstens einem der Ansprüche 1 bis 9.

11. Verfahren zur Überwachung eines Prozesssystems (10),
**dadurch gekennzeichnet, dass**
ein Energieverbrauch des Prozesssystems (10) beim Überführen eines Mediums von einem ersten Zustand in einen zweiten Zustand gemessen wird, der gemessene Energieverbrauch mit einem erwartbaren idealen simulierten physikalischen Vergleichswert ohne Wirkungsgradverluste des Energiebedarfs des Prozesssystems verglichen wird und ein Ergebnis dieses Vergleichs angezeigt wird.

## Claims

1. A control unit (12) for a process system (10) in which at least one medium (24) is transferred from at least one first state (26) to at least one second state (28), **characterized by**
a controller which is connected to at least one measuring instrument (30, 31, 32) for detecting at least one measurable variable of the medium (24) in the first state (26) and to at least one measuring instrument (34, 36) for detecting at least one measurable variable of the medium (24) in the second state (28),
the controller being further connected to at least one measuring instrument (46) for detecting an energy consumption of the process system (10) during the transfer of the medium (24) from the at least one first state (26) to the at least one second state (28), the controller comprising a processor (14) which relates the energy consumption to the difference between the measurement variables of the medium (24) in the first state (26) and the second state (28),
the controller comprising a memory means (16) in which an ideal simulated physical comparison value without efficiency loss of the energy demand for transferring a defined amount of a medium (24) from a defined first state to a defined second state is stored, the controller comprising a comparator (18) which compares the ideal simulated physical comparison value without efficiency loss of the energy demand to the measured energy consumption based on the actual amount of the medium (24) transferred from the first state (26) to the second state (28),
the controller comprising a display device (20) which displays the result of the comparison.

2. The control unit (12) according to Claim 1,
**characterized in that**
the process system (10) is a heat generating system, an electric energy generating system, a cooling system, a ventilation system and/or an air conditioning system.

3. The control unit (12) according to any one of the preceding claims,
**characterized in that**
the control unit (12) comprises standard interfaces (22) for connecting to the measuring instruments (30, 31, 32, 34, 36, 46).

4. The control unit (12) according to any one of the preceding claims,
**characterized in that**
the control unit (12) is connectable by wire and/or wirelessly to the measuring instruments (30, 31, 32, 34, 36, 46).

5. The control unit (12) according to any one of the preceding claims, **characterized in that**
a thermal and/or electrical energy consumption of the process system (10) is detected.

6. The control unit (12) according to any one of the preceding claims, **characterized in that**
a comparison of the energy consumption with the idealized theoretical energy demand is carried out in real time.

7. The control unit (12) according to any one of the preceding claims, **characterized in that**
the result of the comparison is displayed as a deviation of efficiency between the actual efficiency and expectable efficiency of the process system (10).

8. The control unit (12) according to any one of the preceding claims, **characterized in that**
the result of the comparison is displayed as additional operating costs of the process system (10) compared to an optimal operation of the process system (10).

9. The control unit (12) according to any one of the preceding claims, **characterized in that**
the control unit (12) is connectable to a higher-level system via a communication interface.

10. A process system (10) **characterized by**
a control unit (12) according to at least one of Claims 1 to 9.

11. A method for monitoring a process system (10),
**characterized in that**
an energy consumption of the process system (10) during the transfer of a medium from a first state to a second state is measured, the measured energy consumption is compared to an expectable ideal simulated physical comparison value without loss of efficiency of the energy demand of the process system, and a result of this comparison is displayed.

## Revendications

1. Unité de contrôle (12) pour un système de processus (10), dans lequel au moins un milieu (24) passe d'au moins un premier état (26) à au moins un second état (28), **caractérisée par**
un contrôleur, qui est relié à au moins un appareil de mesure (30, 31, 32) pour saisir au moins une grandeur de mesure du milieu (24) dans le premier état (26) et à au moins un appareil de mesure (34, 36) pour saisir au moins une grandeur de mesure du milieu (24) dans le second état (28),
le contrôleur est relié en outre à au moins un appareil de mesure (46) pour saisir une consommation d'énergie du système de processus (10) lors du passage du milieu (24) du premier état (26) au moins au second état (28) au moins,
le contrôleur comprend un processeur (14), qui établit la relation entre la consommation d'énergie et la différence des grandeurs de mesure du milieu (24) dans le premier état (26) par rapport au second état (28),
le contrôleur comprend un moyen de mémorisation (16), dans lequel est stockée une valeur de référence physique, simulée et idéale sans perte de rendement du besoin d'énergie applicable au passage d'une quantité définie d'un milieu (24) d'un premier état défini à un second état défini,
le contrôleur comprend un comparateur (18), qui compare la valeur de référence physique, simulée et idéale sans perte de rendement du besoin d'énergie à la consommation d'énergie mesurée, rapportée à la quantité effective du milieu (24) passé du premier état (26) au second état (28),
le contrôleur comprend un dispositif d'affichage (20), qui visualise le résultat de la comparaison.

2. Unité de contrôle (12) selon la revendication 1,
**caractérisée en ce que**
le système de processus (10) est une installation de production de chaleur, une installation de production d'énergie électrique, une installation frigorifique, une installation de ventilation et/ou un climatiseur.

3. Unité de contrôle (12) selon l'une quelconque des revendications précédentes, **caractérisée en ce que**
l'unité de contrôle (12) comprend les interfaces standards (22) à relier aux appareils de mesure (30, 31, 32, 34, 36, 46).

4. Unité de contrôle (12) selon l'une quelconque des revendications précédentes, **caractérisée en ce que**
l'unité de contrôle (12) peut être reliée aux appareils de mesure (30, 31, 32, 34, 36, 46) au moyen de lignes électriques et/ou sans lignes électriques.

5. Unité de contrôle (12) selon l'une quelconque des revendications précédentes, **caractérisée en ce**
**qu'**une consommation d'énergie électrique et/ou thermique du système de processus (10) est saisie.

6. Unité de contrôle (12) selon l'une quelconque des revendications précédentes, **caractérisée en ce que**
la comparaison de la consommation d'énergie au besoin d'énergie théorique idéalisé s'effectue en temps réel.

7. Unité de contrôle (12) selon l'une quelconque des revendications précédentes, **caractérisée en ce que**
l'affichage du résultat de la comparaison s'effectue sous la forme d'un écart de rendement entre le rendement effectif et le rendement prévisible du système de processus (10).

8. Unité de contrôle (12) selon l'une quelconque des revendications précédentes, **caractérisée en ce que**
l'affichage du résultat de la comparaison s'effectue sous la forme de surcoûts d'exploitation du système de processus (10) par rapport à une exploitation optimale du système de processus (10).

9. Unité de contrôle (12) selon l'une quelconque des revendications précédentes, **caractérisée en ce que**
l'unité de contrôle (12) peut être reliée à un système d'ordre supérieur via une interface de communication.

10. Système de processus (10), **caractérisé par**
une unité de contrôle (12) selon l'une au moins des revendications 1 à 9.

11. Procédé de surveillance d'un système de processus (10),
**caractérisé en ce**
**qu'**une consommation d'énergie du système de processus (10) est mesurée lors du passage d'un milieu d'un premier état à un second état, la consommation d'énergie mesurée est comparée à une valeur de référence physique, simulée, idéale et prévisible sans perte de rendement du besoin d'énergie du système de processus et qu'un résultat de cette comparaison est affiché.
